# DEMANDE DE BREVET EUROPEEN

(11) **EP 1 466 815 A1**
(43) Date de publication de la demande: **13.10.2004**
(21) Numéro de dépôt: 04290881.4
(22) Date de dépôt: 02.04.2004
(51) Int. Cl.: B62D 29/00

(54) **Dispositif à enveloppe viscoélastique pour le remplissage d'un élément creux**

(30) Priorité: 11.04.2003 FR 0304556
(71) Demandeur: Centre d'Etude et de Recherche pour l'Automobile ( CERA), 51100 Reims (FR)
(72) Inventeur: Deprez, Alain, 51140 Jonchery-sur-Vesle (FR); Fortez, Maurice, 92170 Vanves (FR)
(74) Mandataire: Geismar, Thierry

(57) **Abrégé**

L'invention concerne un dispositif de remplissage (1) d'un volume d'un élément creux (2) de carrosserie de véhicule automobile, comprenant une âme (3) formée d'un matériau sensiblement rigide et une enveloppe (4) formée à base d'un matériau précurseur de mousse viscoélastique qui est disposée autour de ladite âme. L'invention concerne également un procédé de réalisation d'un tel dispositif ainsi qu'une carrosserie comprenant un tel dispositif.

## Description

L'invention concerne un dispositif de remplissage d'un volume d'un élément creux de carrosserie de véhicule automobile, un procédé de réalisation d'un tel dispositif ainsi qu'une carrosserie comprenant un tel dispositif.

La fonction principale de ce dispositif est d'isoler l'habitacle des bruits du moteur et/ou provenant de l'extérieur, par exemple des bruits de roulement. En outre, ledit dispositif assure une étanchéité de l'habitacle à la poussière et aux fluides en assurant l'obturation de l'élément creux.

Il a été proposé de réaliser un tel dispositif en matériau précurseur de mousse expansible à la chaleur, afin d'assurer, après son expansion, une obturation étanche de l'élément creux, ceci par placage de la mousse contre la paroi interne de l'élément creux.

Dans ce type de réalisation, le dispositif est introduit avant expansion de la mousse dans l'élément creux. Une étape de chauffage ultérieure, réalisée typiquement lors de la cuisson des mastics ou de la peinture de la carrosserie, permet de réaliser l'expansion de la mousse et d'assurer ainsi l'étanchéité attendue.

Un tel dispositif peut se présenter sous la forme d'un corps oblong qui possède une certaine souplesse. De ce fait, son introduction au sein de l'élément creux peut présenter des difficultés, notamment lorsque le dispositif présente une longueur importante et/ou lorsque l'élément creux a une géométrie complexe.

Un autre type de dispositif a été proposé, assurant une obturation ponctuelle de l'élément creux. Il s'agit d'une pièce rigide, par exemple en matière plastique, sensiblement plane et pourvue sur sa périphérie d'une couronne de matériau précurseur de mousse expansible à la chaleur. Une telle réalisation présente l'inconvénient de nécessiter des moyens d'accrochage du dispositif à l'élément creux, ceci afin d'assurer son maintien en place avant l'étape de chauffage et pendant la durée de vie du véhicule, tels des clips destinés à être logés dans des orifices prévus à cette fin dans ledit élément.

Le problème qui se pose avec cette réalisation comme avec la précédente, est que la fonction de protection acoustique n'est pas remplie de façon satisfaisante du fait du faible amortissement des vibrations conféré par les dispositifs connus.

La présente invention vise à améliorer les performances d'isolation acoustiques des dispositifs de remplissage connus, tout en améliorant également leur facilité de mise en place à l'intérieur de l'élément creux.

A cet effet, et selon un premier aspect, l'invention concerne un dispositif de remplissage d'un volume d'un élément creux de carrosserie de véhicule automobile. Le dispositif comprend une âme formée d'un matériau sensiblement rigide et une enveloppe formée à base d'un matériau précurseur de mousse viscoélastique qui est disposée autour de ladite âme.

Selon un deuxième aspect, l'invention concerne un procédé de réalisation d'un tel dispositif, dans lequel l'enveloppe est extrudée autour de l'âme.

Selon un troisième aspect, l'invention concerne une carrosserie de véhicule automobile comprenant au moins un élément creux dans lequel un tel dispositif est disposé, l'enveloppe dudit dispositif étant expansée de sorte à former une mousse viscoélastique autour de l'âme sensiblement rigide, ladite mousse étant plaquée contre la paroi interne de l'élément creux de sorte à obturer ledit élément en assurant une isolation acoustique.

D'autres objets et avantages de l'invention apparaîtront au cours de la description qui suit, faite en référence aux dessins annexés dans lesquels :
- la figure 1 représente de façon schématique un dispositif de remplissage, avant expansion du matériau précurseur de mousse viscoélastique, inséré dans un élément creux de carrosserie ;
- la figure 2 représente en coupe transversale un dispositif de remplissage, sous sa forme expansée, inséré dans un élément creux de carrosserie ;
- la figure 3 représente en perspective partielle un dispositif de remplissage selon un autre mode de réalisation.

Un dispositif de remplissage 1 comprend une âme 3 et une enveloppe 4 qui est disposée autour de ladite âme.

L'âme 3 est formée d'un matériau sensiblement rigide, et l'enveloppe 4 est formée d'un matériau précurseur de mousse viscoélastique, par exemple expansible à la chaleur.

Le matériau précurseur de mousse peut être réalisé à base de polyuréthane ou d'élastomère thermoplastique. Les mousses viscoélastiques visées possèdent, en combinaison, un comportement visqueux agencé pour absorber l'énergie des vibrations acoustiques qui se propagent au travers de la carrosserie, et un comportement élastique suffisant pour permettre un maintien fiable du dispositif à l'intérieur dudit élément. Ce double comportement permet d'optimiser les fonctions d'isolation acoustique et d'obturation que doit remplir le dispositif dans le cadre de son utilisation.

Le dispositif 1 est destiné à être inséré dans un élément creux 2, tel un élément de carrosserie de véhicule automobile puis à subir une opération de chauffage destinée à assurer une expansion de son enveloppe 4 lui permettant d'épouser les parois internes de l'élément 2 et d'assurer ainsi son obturation par remplissage d'un volume dudit élément.

Le dispositif 1 tel que représenté, avant expansion de l'enveloppe 4, est cylindrique. Toute autre forme allongée peut être prévue, ceci en fonction de la forme générale de la section de l'élément 2 à obturer.

L'âme 3, tout en étant formée d'un matériau rigide, doit dans certains cas présenter une certaine flexibilité pour permettre au dispositif 1 d'épouser la forme générale de l'élément 2 dans sa longueur.

Dans un mode de réalisation, l'âme 3 est formée d'un matériau compact plastique ou métallique, apte à présenter les caractéristiques mécaniques attendues. Dans un mode de réalisation alternatif, l'âme 3 est formée d'une mousse sensiblement rigide.

Il peut être prévu que la longueur du dispositif 1 soit sensiblement similaire à celle de l'élément 2 de sorte à permettre, lorsque l'enveloppe s'est expansée sous l'action de la chaleur, un remplissage sensiblement complet du volume intérieur de l'élément 2 par le dispositif 1, permettant ainsi d'assurer des performances acoustiques optimisées.

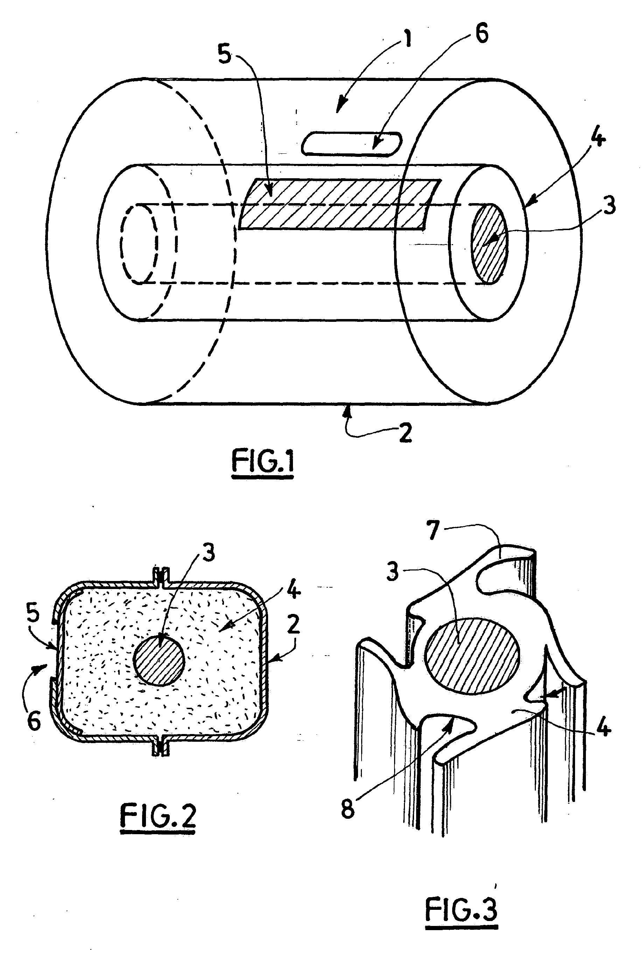

Les éléments creux de carrosserie sont usuellement pourvus d'orifices 6 ménagés dans leurs parois, par exemple à des fins d'allègement ou pour permettre la fixation d'organes fonctionnels, ou encore pour faciliter l'écoulement des bains de cataphorèse. De tels orifices 6 sont susceptibles, notamment lorsqu'ils sont de taille importante, de provoquer lors de l'expansion de l'enveloppe 4 un débordement de la mousse au travers dudit orifice. Pour y remédier, il peut être prévu, ainsi que représenté sur la figure 2, que la périphérie de l'enveloppe 4 soit revêtue, en tout ou partie, d'un film 5 suffisamment rigide pour contenir sensiblement la mousse dans le volume à remplir.

Afin de faciliter le maintien du dispositif 1 dans l'élément 2, avant l'étape de chauffage et d'expansion, il peut être prévu de doter l'enveloppe 4 d'une géométrie particulière.

La figure 3 présente une réalisation où l'enveloppe 4 comprend des languettes longitudinales saillantes 7 aptes à se rabattre dans des logements de forme complémentaires 8 lorsque le dispositif 1 est introduit dans l'élément 2. Du fait de l'élasticité du matériau formant l'enveloppe 4, lesdites languettes assurent un maintien du dispositif 1 dans l'élément 2 jusqu'à l'expansion dudit dispositif.

En outre, l'agencement prévu permet, lorsque l'enveloppe 4 subit son expansion, un rabattement des languettes 7 dans leurs logements 8 respectifs, de manière à assurer une parfaite obturation de l'élément 2 une fois le dispositif 1 complètement expansé.

On décrit à présent des modes de réalisation d'un dispositif 1 selon l'invention.

Un premier mode de réalisation prévoit de former au préalable, par exemple par extrusion, un profilé linéaire destiné à former une âme 3. Ledit profilé est ensuite disposé dans une filière de manière à pouvoir être enrobé par un matériau précurseur de mousse viscoélastique destiné à former une enveloppe 4. Ledit profilé revêtu dudit matériau est alors découpé à la longueur voulue de manière à former un dispositif 1.

Dans un deuxième mode de réalisation, il peut être prévu de procéder à l'extrusion simultanée, ou co-extrusion, dudit profilé et dudit matériau précurseur de mousse. Le dispositif 1 est obtenu par découpe du co-extrudé à la longueur voulue.

Dans un troisième mode de réalisation, notamment lorsque l'élément 2 est volumineux, par exemple dans le cas d'une custode, l'âme 3 peut être réalisée par moulage, l'enveloppe 4 étant alors surmoulée sur ladite âme.

Il peut être prévu en outre, dans ces différents modes de réalisation, de revêtir en tout ou partie, en sortie de filière ou par surmoulage, le matériau précurseur de mousse d'un film 5 destiné à contenir, lors de l'opération de chauffage ultérieure, la mousse dans le volume de l'élément 2 en regard des orifices dudit élément.

On décrit à présent un procédé de montage d'un dispositif 1 dans un élément 2.

Le dispositif 1 est inséré au préalable, dans sa forme non expansée, dans l'élément 2 par glissement au travers d'un orifice prévu dans ledit élément, par exemple en l'une de ses extrémités. L'insertion du dispositif 1 dans l'élément 2 est facilitée du fait de la rigidité apportée par l'âme 3. L'ensemble dispositif 1/élément 2 est alors soumis à une opération de chauffage, typiquement effectuée lors de la phase de cuisson des mastics ou de la peinture de la carrosserie. Sous l'action de la chaleur, l'enveloppe 4 subit une expansion permettant d'assurer une obturation de l'élément 2 par le dispositif 1.

La rigidité de l'âme 3 associée au caractère viscoélastique de l'enveloppe 4 confère à l'ensemble dispositif 1/élément 2, lorsque le dispositif 1 est dans sa configuration expansée, un comportement de « couche contrainte », permettant une amélioration de l'amortissement vibratoire des parois dudit élément. On rappelle que le principe de l'amortissement à « couche contrainte » consiste à recouvrir un élément dont on veut réduire les vibrations par une couche de matériau viscoélastique elle-même recouverte d'une couche de matériau rigide.

Outre ses propriétés d'amortissement, le remplissage de l'élément 2 par le dispositif 1, sur tout ou partie de sa longueur, assure une étanchéité au bruit aérien, ainsi qu'à l'air et à la poussière.

En outre, la rigidité de l'âme 3 permet d'utiliser des éléments 2 de carrosserie d'épaisseur de tôle moindre en raison de la rigidification apportée par ladite âme audits éléments, ce qui permet un allègement du véhicule et une moindre dangerosité en cas de choc.

## Revendications

1. Dispositif de remplissage (1) d'un volume d'un élément creux (2) de carrosserie de véhicule automobile, **caractérisé en ce qu'**il comprend une âme (3) formée d'un matériau sensiblement rigide et une enveloppe (4) formée à base d'un matériau précurseur de mousse viscoélastique qui est disposée autour de ladite âme.

2. Dispositif selon la revendication 1, **caractérisé en ce que** l'âme (3) est formée d'un matériau compact, tel qu'un matériau plastique ou métallique.

3. Dispositif selon la revendication 1, **caractérisé en ce** l'âme (3) est formée d'un matériau expansé tel qu'une mousse.

4. Dispositif selon l'une quelconque des revendications 1 à 3, **caractérisé en ce que** l'enveloppe (4) est recouverte, au moins partiellement, avec un film (5).

5. Dispositif selon l'une quelconque des revendications 1 à 4, **caractérisé en ce que** l'enveloppe (4) est pourvue de languettes longitudinales (7) et de logements (8) qui présentent une forme complémentaire à respectivement la forme d'une languette (7).

6. Dispositif selon l'une quelconque des revendications 1 à 5, **caractérisé en ce que** le matériau précurseur de mousse viscoélastique est expansible à la chaleur.

7. Procédé de réalisation d'un dispositif (1) selon l'une quelconque des revendications 1 à 6, dans lequel l'enveloppe (4) est extrudée autour de l'âme (3).

8. Procédé selon la revendication 7, **caractérisé en ce que** l'enveloppe (4) et l'âme (3) sont co-extrudées.

9. Procédé selon la revendication 7, **caractérisé en ce que** l'âme (3) est formée par moulage préalablement à la disposition de l'enveloppe (4).

10. Carrosserie de véhicule automobile comprenant au moins un élément creux dans lequel un dispositif selon l'une quelconque des revendications 1 à 6 est disposé, l'enveloppe (4) dudit dispositif étant expansée de sorte à former une mousse viscoélastique autour de l'âme sensiblement rigide, ladite mousse étant plaquée contre la paroi interne de l'élément creux de sorte à obturer ledit élément en assurant une isolation acoustique.
